# EUROPEAN PATENT APPLICATION

(11) **EP 4 046 497 A1**
(43) Date of publication of application: **24.08.2022**
(21) Application number: 22156939.5
(22) Date of filing: 16.02.2022
(51) Int. Cl.: A23J 3/18, A23J 3/22

(54) **SEITAN PRODUCT AND A METHOD FOR PRODUCING THE SAME**

(30) Priority: 17.02.2021 FI 20215166
(71) Applicant: Radecon Oy, 03600 Karkkila (FI)
(72) Inventor: Räisänen, Virve, 01730 Vantaa (FI); Loukeinen, Nana, 00840 Helsinki (FI)
(74) Representative: Papula Oy

(57) **Abstract**

A method for producing a seitan product and a seitan product are disclosed. The method comprises a) preparing a dough by mixing at least a gluten flour and water, kneading the dough, and by forming the dough into a desired shape; b) baking the dough at a temperature of about 130 - 180 °C to form a prebaked seitan product; and c) immersing the prebaked seitan product at least partially in an aqueous solution and by baking it further at a temperature of about 140 - 180 °C so as to form the seitan product.

## Description

### TECHNICAL FIELD

The present disclosure relates to a method for producing a seitan product and to a seitan product.

### BACKGROUND

A variety of food products attempt to provide vegetarian or vegan protein sources. Seitan is used as a meat alternative high in protein and can be made from either whole wheat flour or wheat gluten flour. Common limitations of plant-based meat substitute products may include a texture and mouthfeel more homogenous than that of equivalent meat products. Furthermore, as these products may have to be sold precooked, with flavors and aromas pre-incorporated, they do not always replicate the aromas, flavors, and other features, such as texture and mouthfeel associated with cooking or cooked meat, and they also may have added off flavours. Seitan products may often have a relatively tough and dry texture and/or mouthfeel.

There is therefore a need for improved plant-based meat substitutes, which have a desirable texture, succulence, and/or flavour.

### SUMMARY

A method for producing a seitan product is disclosed. The method may comprise a) preparing a dough by mixing at least a gluten flour and water, kneading the dough, and by forming the dough into a desired shape; b) baking the dough at a temperature of about 130 - 180 °C to form a prebaked seitan product; and c) immersing the prebaked seitan product at least partially in an aqueous solution and by baking it further at a temperature of about 140 - 180 °C so as to form the seitan product.

### BRIEF DESCRIPTION OF THE DRAWINGS

The accompanying drawing, which is included to provide a further understanding of the embodiments and constitute a part of this specification, illustrates various embodiments. In the drawings:

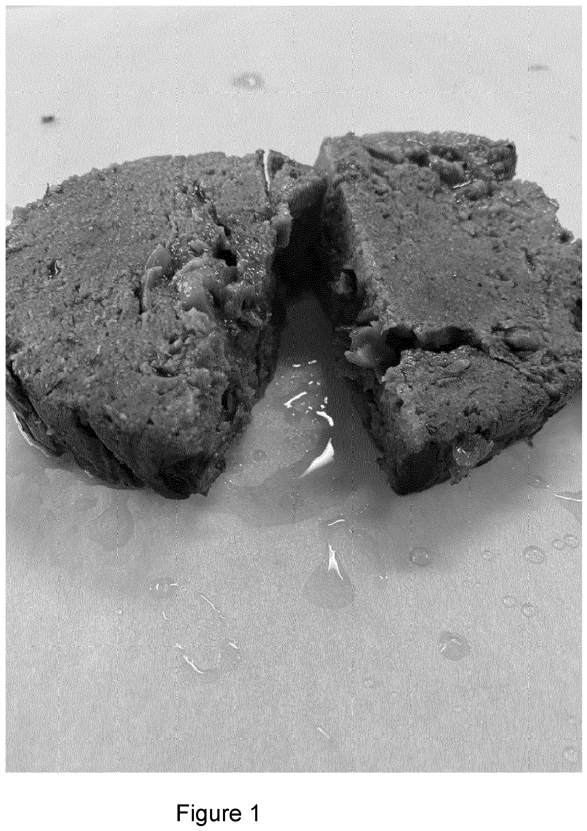

Fig. 1 shows an embodiment of the seitan product.

### DETAILED DESCRIPTION

A method for producing a seitan product is disclosed. The method may comprise
a) preparing a dough by mixing at least a gluten flour and water, kneading the dough, and by forming the dough into a desired shape;
b) baking the dough at a temperature of about 130 - 180 °C to form a prebaked seitan product; and
c) immersing the prebaked seitan product at least partially in an aqueous solution and by baking it further at a temperature of about 140 - 180 °C so as to form the seitan product.

The seitan product described in the current specification may have a high moisture content. It may therefore have a desirable (soft and tender) structure and provide a pleasant, succulent mouthfeel. The method may allow conveniently adding seasonings to the seitan product. The resulting seitan product may be consumed as thin slices or as larger chunks, patties or cubes.

The dough may be prepared at a) by mixing at least the gluten flour, water, and a fiber-containing material.

The fiber-containing material may comprise or be at least one of maize kernels; pulses, such as broad beans, lentils, chickpeas, and/or beans; berries; bran; or any mixtures or combinations thereof.

The fiber-containing material may, together with the gluten, form a desired structure to the dough and the subsequent seitan product. The fiber(s) of the fiber-containing material may disrupt the otherwise firm structure of the gluten-based dough, so that the prebaked seitan product may absorb moisture (water) and/or flavour at c). Not to be bound by theory, it may be that the fiber-containing material may disrupt the molecular structure of the (partially agglomerated) gluten, such that moisture and flavour may be absorbed. The gelling fiber-containing material may also retain moisture during the preparation of the seitan product.

The amount of the fiber-containing material may be e.g. about 10 - 35 weight-% of the wet weight of the dough.

Further ingredients may be added to the dough, if desired. For example, mushrooms, salt (e.g. about 1 - 2 weight-% of the wet weight of the dough), flavouring agents and/or seasonings may be added.

At a), the dough may be kneaded until the gluten contained therein agglomerates partially. For example, the dough may be kneaded using a suitable apparatus, such as a Hobart A-200 mixing machine, 94112421, at 10-50 rpm with 0.5 HP or 0.3 kW for about 20 - 70 s. As the gluten agglomerates at least partially, the dough may then hold the added fiber-containing material. However, it may not be desirable for the gluten to agglomerate fully so as to avoid the dough and the resulting seitan product from becoming too tough. Thus the dough may be kneaded at a) such that the gluten contained therein agglomerates only partially (and not fully).

The mixing and/or kneading may be carried out using any suitable tool for mixing and/or kneading known to a person skilled in the art. Suitable methods commonly used in preparation of food such as by using a mixer equipped with a dough hook, using a food processor, manual mixing, and others.

As used herein, the term "kneading" refers to the process commonly used in making dough(s) wherein the dough is mixed, stretched, and/or pressed to add strength to the final dough. This may be as opposed e.g. to using a mixing method that may cut the structure of the dough and/or the structure of agglomerated gluten therein, such as using a blender.

At a), the dough may be allowed to rest, e.g. for about 15 minutes, prior to forming the dough into a desired shape.

At b), the dough may be baked e.g. a temperature of about 140 - 170 °C to form the prebaked seitan product, or at a temperature of about 160 - 170 °C.

At b), the baking may be continued until the inner part of the prebaked seitan product remains at least partially raw, and/or until the inner part of the prebaked seitan product reaches a temperature of up to 60 °C, or up to 55 °C.

At b), the baking may be continued until the inner part of the prebaked seitan product reaches a temperature of at least 45 °C; or about 45 - 60 °C; or about 45 - 55 °C.

At b), the dough may be baked by dry cooking, optionally wrapped in foil.

At b), the dough may be baked for about 15 - 45 minutes, or for about 25 - 35 minutes, or for about 30 minutes. The time for the baking may be selected e.g. depending on the temperature at which the dough is baked at b), the size and/or shape of the dough, and possibly other factors.

At b), the baking may be continued until the surface of the prebaked seitan product forms a crust, the crust sealing the prebaked seitan product. The thickness of the crust may be e.g. 0.5 - 4 mm.

As the prebaked seitan product obtainable at b) is not fully cooked, it can subsequently be immersed in the aqueous solution at c) and cooked further to obtain a desired structure of the final seitan product. The prebaking at b) may however provide a surface structure, such as the crust, that may seal the prebaked seitan product.

The dough may, if desired, be frozen prior to b). After being frozen, the dough may be allowed to thaw, e.g. for 24 hours at about 4-6 °C, prior to baking at b).

At c), the prebaked seitan product may be fully cooked/baked. As it is immersed in the aqueous solution, such as a (seasoned) broth and/or marinade, it may absorb at least a part of the aqueous solution. The aqueous solution may add flavour to the seitan product. Simultaneously, it may contribute to the soft, tender and succulent texture of the seitan product. The absorption of the water in the aqueous solution may cause gelling of fiber(s), and/or the gluten may absorb water from the aqueous solution. Yet a desired nutritional value(s) of the seitan product may be achieved.

The wet weight of the seitan product obtainable at c) may thus be greater than the wet weight of the dough from which it is formed at a). For example, the wet weight of the seitan product obtainable at c) may be 15 - 35 weight-%, or 25 - 35 weight-%, greater than the wet weight of the dough from which it is formed at a). In other words, the wet weight of the seitan product obtainable at c) may be at least 115 weight-%, or 115 - 135 weight-% of the wet weight of the dough from which it is formed at a).

The baking at c) may be continued until the seitan product has absorbed at least 1 weight-%, or about 1 - 12 weight-%, or about 18 - 25 weight-% of the aqueous solution as compared to the wet weight of the dough from which it is formed at a).

The aqueous solution in c) may be a seasoned broth and/or marinade. The seasonings may include e.g. salt and/or various other seasonings, agents affecting the flavour of the seitan product, etc.

At c), the prebaked seitan product may be baked for about 60 - 150 minutes, or for about 90 - 120 minutes. The time for the baking may be selected e.g. depending on the temperature at which the dough is baked at c), the extent to which it has been baked at b), the size and/or shape of the prebaked seitan product, and possibly other factors.

The baking at b) and/or at c) may be performed in a steam oven.

After c), the seitan product may be allowed to cool in the aqueous solution. The seitan product may then achieve a desired firmness and/or density.

At c), the seitan product may be obtained in a form that is suitable for consumption. It may be further e.g. formed into suitable portions.

The method may further comprise d) cutting the seitan product into smaller pieces, such as patties, slices, and/or cubes.

The seitan product or the smaller pieces may be further e.g. seasoned, and/or packaged.

A seitan product is also disclosed.

The seitan product may be obtainable by the method according to one or more embodiments described in this specification.

The seitan product may comprise at least about 28 weight-% of water of the total wet weight of the seitan product.

The seitan product may comprise protein in an amount of about 12 - 18 weight-%, or of about 15 - 16 weight-%, based on the total wet weight of the seitan product.

The seitan product may comprise dietary fiber in an amount of about 2.5 - 7 weight-%, or about 2.7 - 6 weight-%, based on the total wet weight of the seitan product. The dietary fiber may include fibres from a fibre-containing material, such as maize kernels; pulses, such as broad beans, lentils, chickpeas, and/or beans; berries; bran; or any mixtures or combinations thereof.

### EXAMPLES

Reference will now be made in detail to various embodiments.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

### Example 1 - Preparation of a seitan product

Gluten flour (5 kg) was mixed with water, comminuted maize kernels, and chickpeas. Salt and seasonings, such as comminuted mushrooms, were added. The flour was kneaded at 10-50 RPM at 0,3 kW for approx. 20-70 seconds. The kneaded flour was allowed to rest for 15 minutes, after which it was divided into 1 kg portions. The 1 kg portions were formed into approx. 30 cm long sticks having a circular cross-section and diameter of approx. 7-9 cm.

Each bar of dough was wrapped in foil and baked at 165 °C for 30 mins using a steam oven. Subsequently they were unwrapped and further steam baked at 165 °C for 1 h 30 minutes (or 2 h for thicker bars) in seasoned broth.

The fully baked seitan bars were allowed to cool in the seasoned broth.

Fig. 1 shows a slice of the resulting seitan product. The seitan product has a succulent texture.

It is obvious to a person skilled in the art that with the advancement of technology, the basic idea may be implemented in various ways. The embodiments are thus not limited to the examples described above; instead they may vary within the scope of the claims.

The embodiments described hereinbefore may be used in any combination with each other. Several of the embodiments may be combined together to form a further embodiment. A method or a product, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. Method for producing a seitan product, wherein the method comprises
a) preparing a dough by mixing at least a gluten flour and water, kneading the dough, and by forming the dough into a desired shape;
b) baking the dough at a temperature of about 130 - 180 °C to form a prebaked seitan product; and
c) immersing the prebaked seitan product at least partially in an aqueous solution and by baking it further at a temperature of about 140 - 180 °C so as to form the seitan product.

2. The method according to claim 1, wherein at b), the baking is continued until the surface of the prebaked seitan product forms a crust, the crust sealing the prebaked seitan product.

3. The method according to claim 1 or 2, wherein the dough is prepared at a) by mixing at least the gluten flour, water, and a fiber-containing material.

4. The method according to claim 3, wherein the fiber-containing material comprises or is at least one of maize kernels; pulses, such as broad beans, lentils, chickpeas, and/or beans; berries; bran; or any mixtures or combinations thereof.

5. The method according to any one of claims 1 - 4, wherein at a), the dough is kneaded until the gluten contained therein agglomerates partially.

6. The method according to any one of claims 1 - 5, wherein at b), the baking is continued until the inner part of the prebaked seitan product remains at least partially raw, and/or until the inner part of the prebaked seitan product reaches a temperature of up to 60 °C, or up to 55 °C.

7. The method according to any one of claims 1 - 6, wherein at b), the dough is baked by dry cooking, optionally wrapped in foil.

8. The method according to any one of claims 1 - 7, wherein at b), the dough is baked for about 15 - 45 minutes, or for about 25 - 35 minutes, or for about 30 minutes.

9. The method according to any one of claims 1 - 8, wherein at b), the dough is baked at a temperature of about 160 - 170 °C.

10. The method according to any one of claims 1 - 9, wherein the wet weight of the seitan product obtainable at c) is greater than the wet weight of the dough from which it is formed at a).

11. The method according to any one of claims 1 - 10, wherein the baking at c) is continued until the seitan product has absorbed at least 1 weight-% of the aqueous solution as compared to the wet weight of the dough from which it is formed at a).

12. Seitan product obtainable by the method of any one of claims 1 - 11.

13. Seitan product comprising at least 28 weight-% of water of the total wet weight of the seitan product.

14. The seitan product according to claim 12 or 13, wherein the seitan product comprises protein in an amount of 12 - 18 weight-% based on the total wet weight of the seitan product.

15. The seitan product according to any one of claims 12 - 14, wherein the product comprises dietary fiber in an amount of about 2.5 - 7 weight-% based on the total wet weight of the seitan product, wherein the dietary fiber optionally includes fibres from maize kernels; pulses, such as broad beans, lentils, chickpeas, and/or beans; berries; bran; or any mixtures or combinations thereof.
